# EUROPEAN PATENT APPLICATION

(11) **EP 4 564 074 A1**
(43) Date of publication of application: **04.06.2025**
(21) Application number: 25161868.2
(22) Date of filing: 05.03.2025
(51) Int. Cl.: G02B 7/02, G03B 30/00, H04N 23/55

(54) **CAMERA LENS, IMAGING MODULE, AND TERMINAL DEVICE**

(30) Priority: 31.05.2024 CN 202410696558
(71) Applicant: Jiangxi OFILM Optical Co., Ltd., Nanchang, Jiangxi 330096 (CN)
(72) Inventor: HU, Dezhong, Shenzhen, 518106 (CN); WU, Chun-Fu, Nanchang, 330096 (CN)
(74) Representative: Metida

(57) **Abstract**

The present disclosure relates to a camera, an imaging module, and a terminal device. The camera includes a lens barrel, lenses, a locking ring, a spacer ring, and a gasket ring. The lens barrel defines a through hole along an optical axis, and includes a supporting portion protruding from inner sidewall of the through hole. The lenses are received in the through hole, and at least one lens abuts against the supporting portion. The locking ring is received in the through hole and threadedly connected to the lens barrel. The spacer ring is received in the through hole and between two adjacent of the plurality of lenses. The gasket ring is received in the through hole and elastically compressible along the optical axis direction. The gasket ring is located between two adjacent lenses, between the spacer ring and the adjacent lens, and/or between the locking ring and the adjacent lens.

## Description

### FIELD

The subject matter relates to field of cameras, and more particularly, to a camera, an imaging module, and a terminal device.

### BACKGROUND

During an assembling process of a camera, a locking ring may significantly tilt due to several factors. Such factors include a machining accuracy and tolerance of screw threads of a lens barrel of the camera, a machining accuracy and tolerance of the locking ring, and a hard contact between glass material and plastic material. The tilted locking ring may come into contact with an adjacent lens by a single edge, such that the lens may also be tilted. The tilted lens may in turn affect other lenses or even cause damages to the surface shape of the lenses. Thus, the reliability and the imaging performance of the camera are reduced.

### SUMMARY

In view of the above shortcomings, a camera, an imaging module, and a terminal device having an improved reliability are needed.

The present disclosure provides a camera includes a lens barrel, a number of lenses, a locking ring, a spacer ring, and a gasket ring. The lens barrel defines a through hole extending along an optical axis, and includes a supporting portion protruding from an inner sidewall of the through hole. The lenses are received in the through hole, and at least one of the lenses abuts against the supporting portion. The locking ring is received in the through hole and threadedly connected to the lens barrel. The spacer ring is received in the through hole and between two adjacent of the plurality of lenses. The gasket ring is received in the through hole and elastically compressible along the optical axis direction. The gasket ring is located between two adjacent lenses, between the spacer ring and one of the lenses adjacent to the spacer ring, and/or between the locking ring and one of the lenses adjacent to the locking ring.

The present disclosure further provides an imaging module including a housing, an image sensor, and the above camera. The image sensor is installed in the housing. The housing defines an installation hole. The camera is at least partially received in the installation hole, and the camera is coaxial with the image sensor.

The present disclosure further provides a terminal including the above imaging module.

Other aspects and embodiments of the present disclosure are also expected. The above summary and the following detailed description are not intended to limit the present disclosure to any particular embodiment, but are merely intended to describe some embodiments of the present disclosure.

In the present disclosure, after the lenses, the spacer ring, and the gasket ring are assembled in the through hole of the lens barrel, the locking ring is threadedly connected to the image side of the lens barrel. By setting the gasket ring between the lens and the spacer ring, the gasket ring is compressed by the locking force of the locking ring. The gasket ring may absorb most of the locking force through its own deformation. The deformation of the gasket ring may increase the friction among the gasket ring, the spacer ring, and the lenses, which are beneficial for fixing the lenses, thereby improving the safety and reliability of the camera. In addition, through the deformation of the gasket ring, the looseness of the lens, which is caused by the locking ring being tilted and in contact with the lens by a single edge, may be reduced. The gasket ring generates an elastic force during the deformation. When the camera is switched between high and low temperatures, the gasket ring may abut against the lens through the elastic force, thereby reducing the looseness of the lens at high and low temperatures and improving the reliability of the camera. In addition, the elastic force generated by the gasket ring may also avoid eccentricity of the lenses caused by the position of the lenses changing with the temperature.

### BRIEF DESCRIPTION OF THE DRAWINGS

FIG. 1 is a cross-sectional view of a camera taken along an optical axis according to an embodiment of the present disclosure.
FIG. 2 is a top diagrammatic view of a gasket ring of the camera shown in FIG. 1.
FIG. 3 is a side diagrammatic view of the gasket ring of the camera shown in FIG. 1.
FIG. 4 is a table showing compression ratios of the gasket ring of the camera shown in FIG. 1.
FIG. 5 is a cross-sectional view of a camera taken along an optical axis according to another embodiment of the present disclosure.
FIG. 6 is a table showing compression ratios of a gasket ring of the camera shown in FIG. 5.
FIG. 7 is a cross-sectional view of a camera taken along an optical axis according to yet another embodiment of the present disclosure.
FIG. 8 is a top diagrammatic view of a gasket ring of the camera shown in FIG. 7.
FIG. 9 is a cross-sectional view of a camera taken along an optical axis according to yet another embodiment of the present disclosure.
FIG. 10 is a cross-sectional view of a camera taken along an optical axis according to yet another embodiment of the present disclosure.
FIG. 11 is a cross-sectional view of a camera taken along an optical axis according to yet another embodiment of the present disclosure.
FIG. 12 is a cross-sectional view of a camera taken along an optical axis according to yet another embodiment of the present disclosure.
FIG. 13 is a cross-sectional view of a camera taken along an optical axis according to yet another embodiment of the present disclosure.
FIG. 14 is a cross-sectional view of a camera taken along an optical axis according to yet another embodiment of the present disclosure.
FIG. 15 is a diagrammatic view of an imaging module according to an embodiment of the present disclosure.
FIG. 16 is a block diagram of a terminal device according to an embodiment of the present disclosure.

### DETAILED DESCRIPTION

Implementations of the present disclosure will now be described, by way of embodiments, with reference to the above figures. The same or similar numerals throughout the description indicate the same or similar components or components with the same or similar functions. The embodiments described with reference to the accompanying drawings are examples used to explain the present disclosure, but not to limit the present disclosure.

In addition, technical features involved in different embodiments of this application that are described below may be combined as long as they do not conflict with each other.

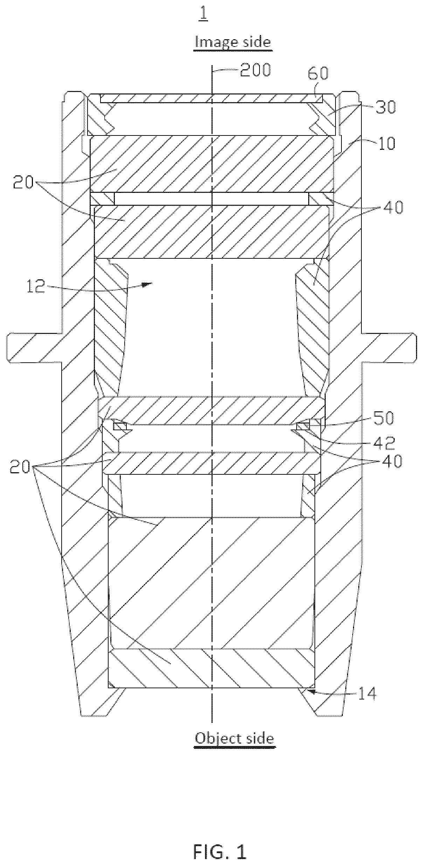

Referring to FIG. 1, a camera 1 is provided according to a first embodiment of the present disclosure. The camera 1 includes a lens barrel 10, a number of lenses 20, a locking ring 30, a number of spacer rings 40, and a gasket ring 50. The camera 1 has an object side and an image side. The object side may be understood as a side facing an object being shot, and the image side may be understood as a side facing away from the object being shot.

The lens barrel 10 defines a through hole 12 extending along the optical axis 200. A supporting portion 14 is provided on an inner sidewall of the lens barrel 10. The supporting portion 14 protrudes from the inner sidewall of the lens barrel 10 along a direction perpendicular to the optical axis 200. In at least one embodiment, the supporting portion 14 is located at an object side of the through hole 12 and supports at least one of the lenses 20. The inner wall of the lens barrel 10 further defines internal threads at an end of the lens barrel 10 facing the image side.

The lenses 20 are received in the through hole 12. At least two adjacent lenses 20 may be connected to each other, or at least two adjacent lenses 20 may be spaced from each other. The lenses 20, which are connected to each other, may be spaced from other lenses 20, and one of the lenses 20 abuts against one side of the supporting portion 14. There may also be two adjacent lenses 20 abutting against two opposite sides of the supporting portion 14. In this embodiment, there are six lenses 20. Four of the lenses 20 are spaced from each other along a direction from the image side to the object side (i.e., from top to bottom). The last two lenses 20 are connected to each other and in contact with the image side of the supporting portion 14. For ease of understanding, two or more lenses 20 connected to each other are defined as a lens group in the embodiment.

The locking ring 30 is received in the through hole 12 and threadedly connected to one end of the lens barrel 10. In at least one embodiment, an outer sidewall of the locking ring 30 defines external threads, and the connection between the locking ring 30 and the lens barrel 10 is achieved by the engagement between the external threads of the locking ring 30 and the internal threads of the lens barrel 10.

Each spacer ring 40 is received in the through hole 12 and located between two adjacent lenses 20. The lenses 20 may be divided into a number of lens groups each having two adjacent lenses 20, and at least one lens group is provided with one spacer ring 40. In at least one embodiment, there are four spacer rings 40, and each spacer ring 40 is located between two adjacent lenses 20 or between two adjacent lens groups. A thickness of the spacer ring 40 along the optical axis 200 may be set according to actual needs, which is not limited in the present disclosure. In other embodiments, the quantity of spacer ring(s) 40 may also be set according to actual needs, and the specific quantity and position of the spacer ring 40 is not limited in the present disclosure.

The gasket ring 50 is received in the through hole 12 and elastically deformable along the optical axis 200. That is, the gasket ring 50 may generate an elastic force when being compressed under a pressure force, and the gasket ring 50 may rebound after the pressure force is removed. Each gasket ring 50 may be located between two adjacent lenses 20 or between two adjacent lens groups. Each gasket ring 50 may also be located between one spacer ring 40 and the lens 20 or lens group adjacent to the spacer ring 40. The gasket ring 50 may also be located between one locking ring 30 and the lens 20 or lens group adjacent to the locking ring 30. That is, the gasket ring 50 may be located between two adjacent lenses 20, between the spacer ring 40 and the lens 20 adjacent to the spacer ring 40, and/or between the locking ring 30 and the lens 20 adjacent to the locking ring 30. The specific location of the gasket ring 50 may be set according to actual needs, which is not limited in the present disclosure. In this embodiment, the gasket ring 50 is located between one spacer ring 40 and the lens 20 that is in contact with the image side surface of the spacer ring 40. In at least one embodiment, an image side surface of the spacer ring 40 defines a groove 42, and a depth of the groove 42 along the optical axis 200 is smaller than a thickness of the gasket ring 50 along the optical axis 200. The gasket ring 50 is located in the groove 42 and elastically compressed by the lens 20. Since the gasket ring 50 is located in the groove 42, the space utilization is improved.

In the above camera 1, after the lenses 20, the spacer rings 40, and the gasket ring 50 are assembled in the through hole 12 of the lens barrel 10, the locking ring 30 is threadedly connected to the image side of the lens barrel 10. As such, the lenses 20, the spacer rings 40, and the gasket ring 50 are locked in the lens barrel 10. The image side surface of the gasket ring 50 is higher than that of the spacer ring 40. By setting the gasket ring 50 between the lens 20 and the spacer ring 40, the gasket ring 50 is compressed indirectly by the locking force of the locking ring 30. After being compressed, the gasket ring 50 is still in contact with the spacer ring 40 and the lens 20, and the parallelism of the camera 1 after assembly will not be affected by the processing accuracy and tolerance of the gasket ring 50. The gasket ring 50 may absorb most of the locking force through its own deformation. The deformation of the gasket ring 50 may increase the friction among the gasket ring 50, the spacer rings 40, and the lenses 20. Also, the friction between the locking ring 30 and the lens 20, the friction between the lens 20 and the spacer ring 40, and the friction between the lens group and the supporting portion 14 are increased, which are beneficial for fixing the lenses 20, the spacer rings 40, and the gasket ring 50 in the lens barrel 10. Thus, the lenses 20 may still be firmly fixed in the lens barrel 10 even under a strong impact, thereby improving the safety and reliability of the camera 1. In addition, through the deformation of the gasket ring 50, the looseness of the lens 20, which is caused by the locking ring 30 being tilted and in contact with the lens 20 by a single edge, may be reduced. The gasket ring 50 generates an elastic force during the deformation. When the camera 1 is switched between high and low temperatures, the gasket ring 50 may abut against the lens 20 through the elastic force, thereby reducing the looseness of the lens 20 at high and low temperatures and improving the reliability of the camera 1. In addition, the gasket ring 50 may abut against the insensitive position of the lens 20, thereby reducing the temperature drift of the glass-plastic structure of camera 1 at high and low temperatures. By setting the gasket ring 50 between two adjacent lenses 20, the elastic force generated by the gasket ring 50 may be evenly transmitted to the lenses 20 located at two sides of the gasket ring 50, thereby avoiding the looseness of the lenses 20. The elastic force generated by the gasket ring 50 may also avoid eccentricity of the lenses 20 caused by the position of the lenses 20 changing with the temperature.

### Comparative Example 1

The structure of the camera in Comparative Example 1 (not shown) is substantially similar to that of the camera 1 in the first embodiment, except that the gasket ring 50 is omitted from the camera in Comparative Example 1. After the lenses 20 and the spacer rings 40 are assembled into the through hole 12 of the lens barrel 10, the lenses 20 and the spacer rings 40 are locked in the lens barrel 10 through the threaded of the locking ring 30 and the lens barrel 10. Due to the absence of the gasket ring 50, the locking ring 30 is tilted due to the processing tolerance, such that the locking ring 30 is in contact with the adjacent lens 20 by a single edge, thereby causing the lens 20 to be tilted. Under an actual drop test, squeeze and damage happen at the surface shape of some lenses 20, and the reliability of the camera does not meet the drop requirements. In actual high and low temperature switching test, looseness happens at some lenses 20, resulting in eccentricity of the lenses 20, and the reliability of the camera does not meet the requirements for high and low temperature switching.

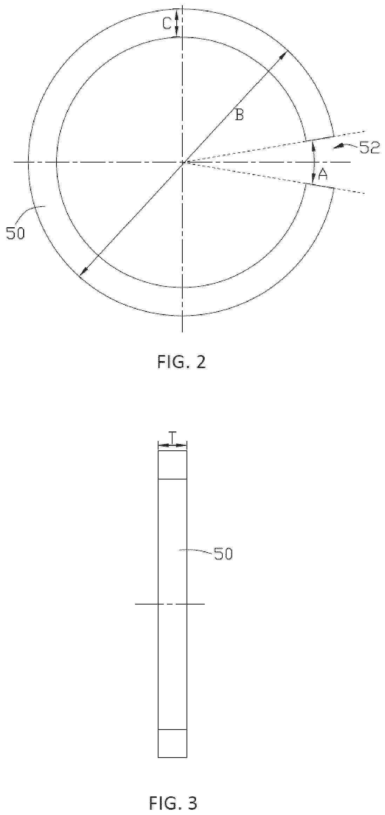

Referring to FIGS. 2 and 3, in at least one embodiment, the gasket ring 50 defines a notch 52, such that the gasket ring 50 is substantially C-shaped. An angle A defined by the notch 52 is substantially in a range from 5° to 45°, and the angle A may be 5°, 10°, 15°, 20°, 25°, 30°, 35°, 40°, and 45°. In this way, since the gasket ring 50 has the notch 52, the problem of a large outer diameter tolerance of the gasket ring 50 may be solved. When the outer diameter tolerance of the gasket ring 50 is large due to the manufacturing process, when the camera 1 is assembled, the locking ring 30 will be in contact with and squeeze the gasket ring 50. Due to the existence of the notch 52 on the gasket ring 50, the gasket ring 50 will be contracted toward the notch 52 when squeezed by the locking ring 30. The object side surface and the image side surface of the gasket ring 50 after the assembly are flat surfaces, and any unerasable gap along the optical axis 200 due to the distortion of the gasket ring 50 with a large outer diameter tolerance is avoided, such that the gasket ring 50 may be smoothly assembled into the camera 1 without affecting a focal length or other optical parameters of the camera 1. Also, the structure of the camera 1 is optimized, and the usage range of the gasket ring 50 is increased. By limiting the angle defined by the notch 52, a uniform force applied by the gasket ring 50 may be ensured. When the angle A defined by the notch 52 is less than 5°, the angle is small, such that the notch 52 is difficult to be processed at the gasket ring 50. Also, the ability of the gasket ring 50 to deform under the pressure force is poor, resulting in possible gaps due to the distortion of the gasket ring 50, such that the problem of the large outer diameter tolerance of the gasket ring 50 may not be solved. When the angle A defined by the notch 52 is greater than 45°, the angle of notch 52 is large. After the gasket ring 50 is assembled into the camera 1 and squeezed by the locking ring 30, the gasket ring 50 will be contracted toward the notch 52 but the notch 52 after the contraction may still have a larger angle, resulting in an nonuniform elastic force of the gasket ring 50 applied onto the lens 20, such that the lens 20 may easily tilt that affects the reliability of the camera 1.

Table 1 shows the angles defined by the notch 52 of the gasket ring 50 and the corresponding implementation effects.

**Table 1**

| Angle of notch/° | Implementation effect |
|---|---|
| 2 | Since the notch is small, the process of the notch fails. |
| 5 | Good |
| 10 | Good |
| 15 | Good |
| 20 | Good |
| 25 | Good |
| 30 | Good |
| 35 | Good |
| 40 | Good |
| 45 | Good |
| 50 | Since the angle is large, the lens abutting against the image side surface of the gasket ring tilts in high and low temperature switching test. |
| 60 | Since the angle is large, the lens abutting against the image side surface of the gasket ring and the lens adjacent to the object side of the gasket ring tilt in high and low temperature switching test. |

### Comparative Example 2

The structure of the camera in Comparative Example 2 (not shown) is substantially similar to that of the camera 1 in the first embodiment, except that the angle defined by the notch 52 of the gasket ring 50 in Comparative Example 2 is equal to 2°. Due to the small angle defined by the notch 52, the process of the gasket ring 50 fails.

### Comparative Example 3

The lens of the camera in Comparative Example 3 (not shown) has a similar structure to that of the camera 1 in the first embodiment, except that the angle defined by the notch 52 of the gasket ring 50 in Comparative Example 3 is equal to 50°. After the lenses 20, the spacer rings 40, and the gasket rings 50 are assembled into the through hole 12 of the lens barrel 10, the lenses 20, the spacer rings 40, and gasket rings 50 are locked in the lens barrel 10 through threaded connection between the locking ring 30 and the lens barrel 10. When the angle defined by the notch 52 of the gasket ring 50 is equal to 50°, after the gasket ring 50 is squeezed by the locking ring 30, the gasket ring 50 will be contracted but the notch 52 after the contraction may still have a larger angle (in multiple times of tests, the angle defined by the notch 52 after the contraction is in a range from 45° to 48°), such that some areas of the gasket ring 50 fail to apply an elastic force onto the lens 20. In the actual high and low temperature switching test, the lens 20 abutting against the image side surface of the gasket ring 50 tilts, and the reliability of the camera does not meet the requirements for high and low temperature switching.

### Comparative Example 4

The lens of the camera in Comparative Example 4 (not shown) has a similar structure to that of the camera 1 in the first embodiment, except that the angle defined by the notch 52 of the gasket ring 50 in Comparative Example 4 is equal to 60°. After the lenses 20, the spacer rings 40, and the gasket rings 50 are assembled into the through hole 12 of the lens barrel 10, the lenses 20, the spacer rings 40, and gasket rings 50 are locked in the lens barrel 10 through threaded connection between the locking ring 30 and the lens barrel 10. When the angle defined by the notch 52 of the gasket ring 50 is equal to 60°, after the gasket ring 50 is squeezed by the locking ring 30, the gasket ring 50 will be contracted but the notch 52 after the contraction may still have a larger angle (in multiple times of tests, the angle defined by the notch 52 after the contraction is in a range from 46° to 54°), such that some areas of the gasket ring 50 fail to apply an elastic force onto the lens 20. In the actual high and low temperature switching test, the lens 20 abutting against the image side surface of the gasket ring 50 and the lens 20 adjacent to the object side of the gasket ring 50 tilt, and the reliability of the camera does not meet the requirements for high and low temperature switching.

In other embodiments of the present disclosure, the gasket ring 50 may be annular, that is, the gasket ring 50 does not define any notch 52.

In at least one embodiment, the gasket ring 50 is made of an elastic material such as rubber, silicone, lactoprene, or polyurethane elastomer.

In at least one embodiment, an outer diameter B of the gasket ring 50 along a direction perpendicular to the optical axis 200 is substantially in a range from 3 mm to 30 mm. For example, the outer diameter B may be 3 mm, 4 mm, 5 mm, 10 mm, 15 mm, 20 mm, 25 mm, and 30mm. As such, the gasket ring 50 may be compatible with most of the cameras on the market, and the compatibility of the gasket ring 50 is improved. By limiting the outer diameter B of the gasket ring 50, on the one hand, the gasket ring 50 may be in fully contact with the edge of the lens 20 to apply a uniform elastic force to the lens 20. On the other hand, the gasket ring 50 is easily processed. When the outer diameter B of the gasket ring 50 is less than 3 mm, the outer diameter of the gasket ring 50 is small that may exceed a lower limit for processing, which is not conducive to processing the gasket ring 50. When the outer diameter B of the gasket ring 50 is greater than 30 mm, the outer diameter of the gasket ring 50 is large enough to suit most of the cameras on the market, but the periphery of the gasket ring 50 is easily deformed and folded under a pressure force, resulting in unerasable gaps in the direction of the optical axis 200 that affects the parallelism and reliability of the camera 1. Moreover, when the outer diameter of the gasket ring 50 is large, the diameter of the camera 1 also increases, which is not conducive to the miniaturization of the camera 1.

Table 2 shows the outer diameters of the gasket ring 50 along the direction perpendicular to the optical axis 200 and the corresponding implementation effects.

**Table 2**

| Outer diameter of gasket ring/mm | Implementation effects |
|---|---|
| 2 | The outer diameter of the gasket ring is small and the process of the gasket ring fails. Or, since the outer diameter of the gasket ring is small, after an opening is defined in the gasket ring, the opening is smaller than a photosensitive area of an image sensor or an effective light transmission area of the lens, resulting in a failure during shooting. Or, the gasket ring breaks after the opening is defined therein. |
| 3 | Good |
| 4 | Good |
| 5 | Good |
| 10 | Good |
| 15 | Good |
| 20 | Good |
| 25 | Good |
| 30 | Good |
| 40 | The periphery of the gasket ring is deformed and folded under a pressure force, and the lens abutting against the image side surface of the gasket ring breaks. |

### Comparative Example 5

The structure of the camera in Comparative Example 5 (not shown) is substantially similar to that of the camera 1 in the first embodiment, except that the outer diameter B of the gasket ring 50 in Comparative Example 5 in the direction perpendicular to the optical axis 200 is equal to 2 mm. Due to the small outer diameter of the gasket ring 50 that exceeds the lower limit for processing, the process of the gasket ring 50 fails. Even if the process is successful, the gasket ring 50 after the processing has a small outer diameter, after the opening is defined in the gasket ring 50, the opening is smaller than the photosensitive area of the image sensor or the effective light transmission area of the lens 20, resulting in a failure during shooting. Or, the gasket ring 50 breaks after the opening is defined therein, such that the gasket ring 50 cannot be used.

### Comparative Example 6

The structure of the camera in Comparative Example 6 (not shown) is substantially similar to that of the camera 1 in the first embodiment, except that the outer diameter B of the gasket ring 50 in Comparative Example 6 in the direction perpendicular to the optical axis 200 is equal to 40 mm. After the lenses 20, the spacer rings 40, and the gasket rings 50 are assembled into the through hole 12 of the lens barrel 10, the lenses 20, the spacer rings 40, and gasket rings 50 are locked in the lens barrel 10 through threaded connection between the locking ring 30 and the lens barrel 10. Since the outer diameter of the gasket ring 50 reaches 40 mm, the periphery of the gasket ring 50 is deformed and folded under the pressure force, resulting in an unerasable gap between the gasket ring 50 and the locking ring 30 and/or between the gasket ring 50 and the adjacent lens 20 along the optical axis 200 (such gaps are formed by the folded periphery of the gasket ring 50). The gaps will increase the elastic force of the gasket ring 50 applied onto the lens 20. In the high and low temperature switching test, the lens 20 abutting against the image side surface of the gasket ring 50 is squeezed and breaks, and the reliability of the camera does not meet the requirements for high and low temperature switching.

In at least one embodiment of the present disclosure, a width C of the gasket ring 50 along the direction perpendicular to the optical axis 200 is substantially in a range from 0.5 mm to 1 mm. For example, the width C may be 0.5 mm, 0.6 mm, 0.7 mm, 0.8 mm, 0.9 mm, and 1 mm. By limiting the width C of the gasket ring 50, on the one hand, an excessive elastic force generated by the compressed gasket ring 50, which may beyond the bearing range of the lens 20, may be avoided, thereby avoiding any deformation of the lens 20. On the other hand, it is beneficial for processing the gasket ring 50. When the width C of the gasket ring 50 is less than 0.5 mm, the width of the gasket ring 50 exceeds the lower limit for processing, which is not conducive to processing the gasket ring 50. When the width C of the gasket ring 50 is greater than 1 mm, the elastic force generated by the compressed gasket ring 50 is large, which may exceed the bearing range of the lens 20. Moreover, the gasket ring 50 with a large width may block the effective light transmission area of the lens 20, thereby affecting the imaging performance of the camera 1.

Table 3 shows the widths of the gasket ring 50 along the direction perpendicular to the optical axis 200 and the corresponding implementation effects.

**Table 3**

| Width of gasket ring/mm | Implementation effects |
|---|---|
| 0.3 | Since the width of the gasket ring is small, the process of the gasket ring fails. Or, the gasket ring may be distorted and break. |
| 0.5 | Good |
| 0.6 | Good |
| 0.7 | Good |
| 0.8 | Good |
| 0.9 | Good |
| 1.0 | Good |
| 2 | The width of the gasket ring is large, resulting in a small amount of incoming light of the camera, and edges of the images captured by the camera become blurry. |

### Comparative Example 7

The structure of the camera in Comparative Example 7 (not shown) is substantially similar to that of the camera 1 in the first embodiment, except that the width of the gasket ring 50 in Comparative Example 7 in the direction perpendicular to the optical axis 200 is equal to 0.3 mm. Due to the small width of the gasket ring 50 that exceeds the lower limit for processing, the process of the gasket ring 50 fails. Even when the processing is successful, due to the small width of the gasket ring 50, the locking ring 30 may distort the gasket ring 50 during the actual assembly, such that the gasket ring 50 breaks and is unable to provide a stable and effective elastic force. The gasket ring 50 cannot be used normally.

### Comparative Example 8

The structure of the camera of Comparative Example 8 (not shown) is substantially similar to that of the camera 1 of the first embodiment, except that the width C of the gasket ring 50 in Comparative Example 8 in the direction perpendicular to the optical axis 200 is 2 mm. After the lenses 20, the spacer rings 40, and the gasket rings 50 are assembled into the through hole 12 of the lens barrel 10, the lenses 20, the spacer rings 40, and gasket rings 50 are locked in the lens barrel 10 through threaded connection between the locking ring 30 and the lens barrel 10. Since the width of the gasket ring 50 reaches 2 mm, the gasket ring 50 blocks the effective light transmission area of the lens 20. In an actual shooting test, the amount of incoming light of the camera decreases, and the edges of the images captured with the camera become blurry. The reliability of the camera does not meet the shooting requirements.

In at least one embodiment of the present disclosure, a thickness T of the gasket ring 50 along the optical axis 200 is substantially in a range from 0.3 mm to 1 mm. For example, the thickness T may be 0.3 mm, 0.4 mm, 0.5 mm, 0.6 mm, 0.7 mm, 0.8 mm, 0.9 mm, and 1 mm. By limiting the range of the thickness T of the gasket ring 50, on the one hand, the gasket ring 50 is prevented from too thick that may affect the assembly of the camera 1, and the gasket ring 50 is easily compressed and deformed to generate an elastic force that will be applied onto the lens 20. On the other hand, it is conducive to processing the gasket ring 50. When the thickness T of the gasket ring 50 is less than 0.3 mm, the thickness of the gasket ring 50 exceeds the lower limit for processing, which is not conducive to processing the gasket ring 50. When the thickness T of the gasket ring 50 is greater than 1 mm, the thickness of the gasket ring 50 is thick, such that the gasket ring 50 is hard to deform and compress, which affects the assembly of the camera 1. Also, the gasket ring 50 with a large thickness may squeeze and break the lens 20 during the assembly, which affects the reliability of the camera 1 or increases the length of the lens barrel 10 that is not conducive to the miniaturization of the camera 1.

Table 4 shows the thicknesses of the gasket ring 50 along the optical axis 200 and the corresponding implementation effects.

**Table 4**

| Thickness of gasket ring/mm | Implementation effects |
|---|---|
| 0.2 | Since the thickness of the gasket ring is small, the process of the gasket ring fails. Or, the gasket ring is easily distorted and breaks. |
| 0.3 | Good |
| 0.4 | Good |
| 0.5 | Good |
| 0.6 | Good |
| 0.7 | Good |
| 0.8 | Good |
| 0.9 | Good |
| 1.0 | Good |
| 1.5 | Since the thickness of the gasket ring is large, the locking ring cannot be fully in contact with the image side of the lens barrel, such that the assembly of the camera fails. |

### Comparative Example 9

The structure of the camera in Comparative Example 9 (not shown) is substantially similar to that of the camera 1 in the first embodiment, except that the thickness T of the gasket ring 50 in Comparative Example 9 along the optical axis 200 is equal to 0.2 mm. Since the thickness of the gasket ring 50 is small and exceeds the lower limit for processing, the process of the gasket ring 50 fails. Even when the process is successful, due to the small thickness of the gasket ring 50, the locking ring 30 may squeeze and break the gasket ring 50 during actual assembly, such that the gasket ring 50 is unable to provide stable and effective elastic force and cannot be normally used.

### Comparative Example 10

The structure of the camera in Comparative Example 10 (not shown) is substantially similar to that of the camera 1 in the first embodiment, except that the thickness T of the gasket ring 50 in Comparative Example 10 along the optical axis 200 is 1.5 mm. After the lenses 20, the spacer rings 40, and the gasket rings 50 are assembled into the through hole 12 of the lens barrel 10, the lenses 20, the spacer rings 40, and gasket rings 50 are locked in the lens barrel 10 through threaded connection between the locking ring 30 and the lens barrel 10. Since to the thickness of the gasket ring 50 reaches 1.5 mm, the thickness of the gasket ring 50 after being compressed is still large (in multiple tests, the thickness of the gasket ring 50 after being compressed is in a range from 1 mm to 1.2 mm). Thus, the gasket ring 50 may occupy a space in the through hole 12 along the optical axis 200, such that the locking ring 30 cannot be fully in contact with the image side of the lens barrel 10, and assembly of the camera fails.

In at least one embodiment, a compression ratio of the gasket ring 50 along the optical axis 200 (i.e., a ratio of the compression amount of the gasket ring 50 to the thickness T of the gasket ring 50 along the optical axis 200) is substantially in a range from 20% to 50%. For example, the compression ratio may be 20%, 30%, 40%, and 50%. By limiting the compression ratio of the gasket ring 50, on the one hand, the gasket ring 50 may generate a uniform elastic force through its own deformation, thereby stably fixing the lenses 20. On the other hand, the gasket ring 50 is prevented from being excessively compressed that may result in a permanent deformation, or the gasket ring 50 may not deform and provide any elastic force under a pressure force. When the compression ratio of the gasket ring 50 is less than 20%, the elastic force generated by the gasket ring 50 is small and cannot stably fix the lenses 20. Also, the gasket ring 50 is hard and not easily compressed, and when the locking ring 30 is assembled into the lens barrel 10, the gasket ring 50 is not easily compressed and deformed, resulting in damages to objects such as the lens 20. When the compression ratio of the gasket ring 50 is greater than 50%, the gasket ring 50 will permanently deform when being compressed, such that the gasket ring 50 cannot generate any elastic force when being compressed, thus cannot stably fix the lenses 20 and affecting the reliability of the camera 1.

Table 5 shows the compression ratios of the gasket ring 50 along the optical axis 200 and the corresponding implementation effects.

**Table 5**

| Compression ratios of gasket ring/% | Implementation effects |
|---|---|
| 5 | Since the compression ratio of the gasket ring is small, the gasket ring generates a small elastic force when being compressed, such that the three lenses at the object side of the gasket ring may be loose in high and low temperature switching test. |
| 20 | Good |
| 25 | Good |
| 30 | Good |
| 35 | Good |
| 40 | Good |
| 45 | Good |
| 50 | Good |
| 60 | Since the compression ratio of the gasket ring is large, the gasket ring permanently deforms when being compressed, and several lenses may be loose in high and low temperature switching test. |

### Comparative Example 11

The structure of the camera in Comparative Example 11 (not shown) is substantially similar to that of the camera 1 in the first embodiment, except that the compression ratio of the gasket ring 50 in Comparative Example 11 along the optical axis 200 is 5%. After the lenses 20, the spacer rings 40, and the gasket rings 50 are assembled into the through hole 12 of the lens barrel 10, the lenses 20, the spacer rings 40, and gasket rings 50 are locked in the lens barrel 10 through threaded connection between the locking ring 30 and the lens barrel 10. Since the compression ratio of the gasket ring 50 is 5%, the elastic force generated by the gasket ring 50 after being compressed is relatively small. In the actual high and low temperature switching test, the three lenses 20 at the object side of the gasket ring 50 may be loose, resulting in eccentricity of the lenses 20. Thus, the reliability of the camera cannot meet the requirements for high and low temperature switching.

### Comparative Example 12

The structure of the camera in Comparative Example 12 (not shown) is substantially similar to that of the camera 1 of the first embodiment, except that the compression ratio of the gasket ring 50 in Comparative Example 12 along the optical axis 200 is 60%. After the lenses 20, the spacer rings 40, and the gasket rings 50 are assembled into the through hole 12 of the lens barrel 10, the lenses 20, the spacer rings 40, and gasket rings 50 are locked in the lens barrel 10 through threaded connection between the locking ring 30 and the lens barrel 10. Since the compression ratio of the gasket ring 50 reaches 60%, the gasket ring 50 is permanently deformed after being compressed and cannot provide any elastic force for the lenses 20. In the actual high and low temperature switching test, several lenses 20 may be loose, resulting in eccentricity of the lenses 20. Thus, the reliability of the camera cannot meet the requirements of high and low temperature switching.

In at least one embodiment of the present disclosure, a Shore hardness of the gasket ring 50 is in a range from 20 to 70. For example, the Shore hardness may be 20, 30, 40, 50, 60, and 70. By limiting the Shore hardness of the gasket ring 50, on the one hand, the gasket ring 50 may reduce the locking force from the locking ring 30 through its own deformation. The gasket ring 50 is easily compressed and will not conflict with the locking ring 30 when the locking force is applied. On the other hand, the gasket ring 50 may reduce the deformation caused by the rotation of the gasket ring 50 together with the locking ring 30. When the Shore hardness of the gasket ring 50 is less than 20, the gasket ring 50 tends to be soft, and the gasket ring 50 may be distorted when the gasket ring 50 rotates with the locking ring 30. Also, the gasket ring 50 cannot reduce the locking force of the locking ring 30, such that the locking ring 30 will apply the locking force to other objects such as the lenses 20, which affects the reliability of the camera 1. When the Shore hardness of the gasket ring 50 is greater than 70, the gasket ring 50 tends to be hard and is difficult to deform when being compressed. Additionally, the gasket ring 50 may conflict with the locking ring 30, such that the locking ring 30 may be unable to fully assemble into the lens barrel 10. The gasket ring 50 with a large Shore hardness may also exert a hard contact force onto the lenses 20 under the function of the locking force of the locking ring 30, resulting in damages to the lens 20 and affecting the reliability of the camera 1.

Table 6 shows the Shore hardnesses of the gasket ring 50 and the corresponding implementation effects.

**Table 6**

| Shore hardnesses | Implementation effects |
|---|---|
| 10 | Since the Shore hardness of the gasket ring is small, the gasket ring may not provide a stable elastic force to the lenses, and several lenses may be loose in high and low temperature switching test, resulting in eccentricity. |
| 20 | Good |
| 25 | Good |
| 30 | Good |
| 35 | Good |
| 40 | Good |
| 45 | Good |
| 50 | Good |
| 55 | Good |
| 60 | Good |
| 65 | Good |
| 70 | Good |
| 80 | Since the Shore hardness of the gasket ring is large, the locking ring may not in fully contact with the image side of the lens barrel when the locking ring is assembled, resulting in failure of the assembly of the camera. |

### Comparative Example 13

The structure of the camera of Comparative Example 13 (not shown) is substantially similar to that of the camera 1 of the first embodiment, except that the Shore hardness of the gasket ring 50 in Comparative Example 13 is equal to 10. After the lenses 20, the spacer rings 40, and the gasket rings 50 are assembled into the through hole 12 of the lens barrel 10, the lenses 20, the spacer rings 40, and gasket rings 50 are locked in the lens barrel 10 through threaded connection between the locking ring 30 and the lens barrel 10. Since the Shore hardness of the gasket ring 50 is equal to 10, when the locking ring 30 is assembled, the soft gasket ring 50 will rotate with the locking ring 30 and then be distorted. Thus, the gasket ring 50 may not provide a stable elastic force for the lenses 20. In actual high and low temperature switching test, several lenses 20 may be loose, resulting in eccentricity of some lenses 20. Thus, the reliability of the camera does not meet the requirements for high and low temperature switching.

### Comparative Example 14

The structure of the camera in Comparative Example 14 (not shown) is substantially similar to that of the camera 1 in the first embodiment, except that the Shore hardness of the gasket ring 50 in Comparative Example 14 is equal to 80. After the lenses 20, the spacer rings 40, and the gasket rings 50 are assembled into the through hole 12 of the lens barrel 10, the lenses 20, the spacer rings 40, and gasket rings 50 are locked in the lens barrel 10 through threaded connection between the locking ring 30 and the lens barrel 10. Since the Shore hardness of gasket ring 50 reaches 80, the gasket ring 50 is not easily compressed and deformed during the assembly of the locking ring 30, such that the locking ring 30 may not in fully contact with the image side of the lens barrel 10, resulting in failure of the assembly of the camera.

In at least one embodiment of the present disclosure, a shape of the cross-section of the gasket ring 50, when viewed perpendicular to the optical axis 200, is circular. By limiting the cross-sectional shape of the gasket ring 50, when the gasket ring 50 is compressed, two opposite surfaces of the gasket ring 50 along the optical axis 200 may be in planar contact with the corresponding lens 20, the locking ring 30, and the spacer ring 40, such that the force applied onto the lenses 20 are more uniform. In other embodiments, the cross-section of the gasket ring 50, when viewed perpendicular to the optical axis 200 and the cross-section contains a geometric center of the gasket ring 50, may also be elliptical, parallelogram, square, trapezoidal, hexagonal, octagonal, or other shapes.

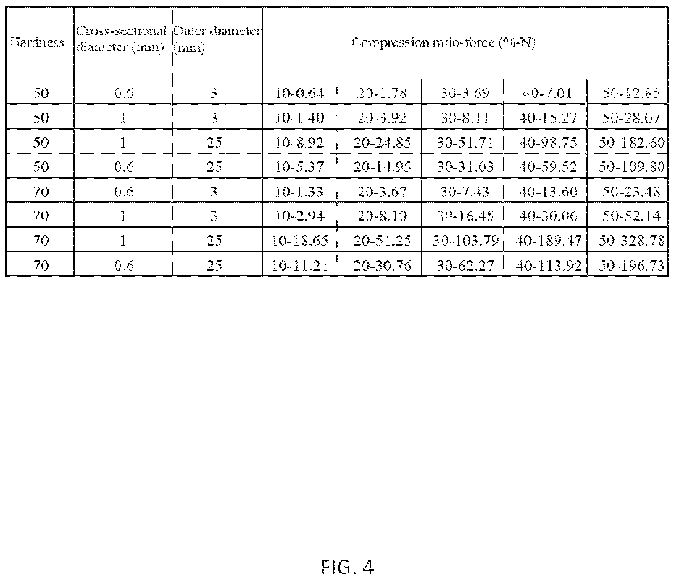

Referring to FIG. 4, where the term "compression ratio-force" may be understood as the pressure force corresponding to the compression ratio. As shown in the relationships among the hardnesses, the cross-sectional diameter, the outer diameter, the compression ratios, and the pressure force of the gasket ring 50 shown in FIG. 4, the gasket ring 50 will generate appropriate pressure forces under different conditions, such that the lenses 20 may maintain small changes under impact and during high and low temperature switching, thereby improving the safety and reliability of the camera 1.

Referring to FIG. 1, in the embodiment, the camera 1 may further includes a filter 60. The filter 60 is located on a side of the locking ring 30 away from the lenses 20. The filter 60 allows the camera 1 to have a light filtering ability, thereby improving the imaging performance of the camera 1.

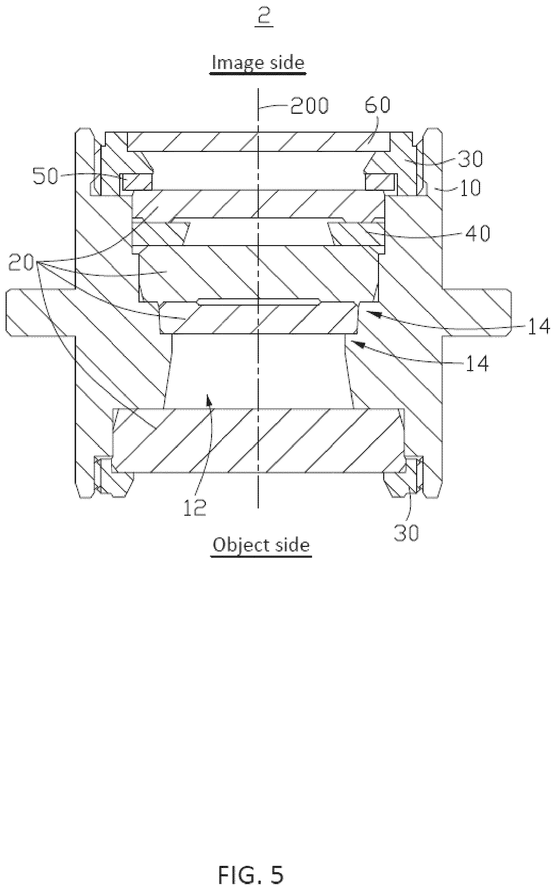

Referring to FIG. 5, a camera 2 is provided according to a second embodiment of the present disclosure. The structure of the camera 2 in the second embodiment is substantially similar to that of the camera 1 in the first embodiment, except that there are four lenses 20 in the embodiment and the two lenses 20 located in the middle are connected to each other to form a lens group. The lens group is spaced from the two lenses 20 on its two sides. In the embodiment, there is one spacer ring 40 located between the lens group and the corresponding lens 20, and the lens group abuts against the supporting portion 14. The lens 20 located on the object side abuts against the object side surface of the supporting portion 14. Also, there are two locking rings 30, which are threadedly connected to two ends of the lens barrel 10, respectively. The filter 60 is located at the image side of the locking ring 30 located at the image side. The gasket ring 50 is located between the locking ring 30 located at the image side and the adjacent lens 20. By setting the gasket ring 50 between the locking ring 30 and the lens 20, when the locking force is applied to the locking ring 30, the gasket ring 50 is deformed under the locking force, and may absorbs most of the locking force through its own deformation, thereby avoiding a hard contact between the lens 20 and the locking ring 30 and reducing the deformation of the lenses 20. At the same time, the problem of the lenses 20 easily being loosened, which is caused by the locking ring 30 being tilted and in contact with the lens 20 by a single edge, may be solved. In addition, under the locking force of the locking ring 30, the friction between the gasket ring 50 and the lenses 20 are increased, which may better fix the lenses 20 under a mechanical impact and improve the safety. By setting the gasket ring 50 between the locking ring 30 and the lens 20, the lenses 20 are sealed, thereby preventing impurities such as water and dust from entering the through hole 12. By setting the gasket ring 50 between the locking ring 30 and the lens 20, the gasket ring 50 may not be affected by air gap sensitivity, thereby improving the imaging performance of the camera 2.

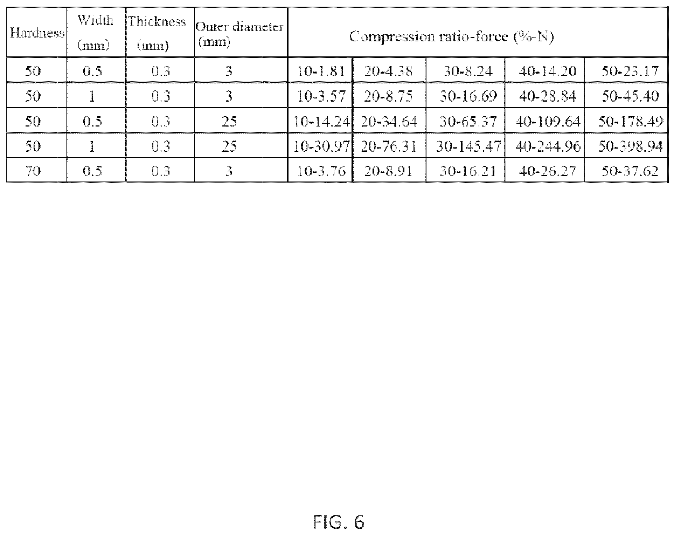

In at least one embodiment, a cross-sectional shape of the gasket ring 50 perpendicular to the optical axis 200 is a quadrilateral. Referring to FIG. 6, from the relationships among the hardnesses, the widths, the thicknesses, the outer diameters, the compression ratios, and the compression forces of the gasket ring 50 shown in FIG. 6, the gasket ring 50 will generate appropriate compression forces under different conditions, such that the lenses 20 may maintain small changes under impact and during high and low temperature switching, thereby improving the safety and reliability of the camera 2.

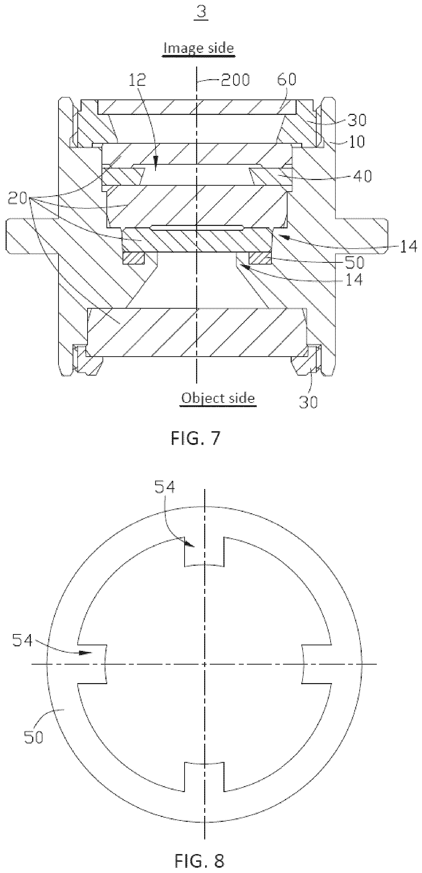

Referring to FIG. 7, a camera 3 is provided according to a third embodiment of the present disclosure. The structure of the camera 3 in the third embodiment is substantially similar to that of the camera 2 in the second embodiment, except that the gasket ring 50 is located between the object side of the lens group and the image side of the supporting portion 14 in the embodiment, and after the assembly, the lens 20 abuts against the supporting portion 14. By providing the gasket ring 50 between the supporting portion 14 and the lens 20, the locking ring 30 compresses the gasket ring 50 through the locking force, thereby increasing the friction between the lens 20 and the supporting portion 14 of the lens barrel 10, which is beneficial for better fixing the lenses 20. The more lenses 20 in the camera 3, the better the fixing effect.

Referring to FIG. 8, in at least one embodiment, four protrusions 54 are uniformly connected to an inner edge of the gasket ring 50. The image side surface of the supporting portion 14 of the lens barrel 10 includes four grooves (not shown) that correspond one-to-one with the four protrusions 54. When the gasket ring 50 is placed on the supporting portion 14, the four protrusions 54 are received in the four grooves, respectively. The gasket ring 50, which has four protrusions 54 uniformly provided on the inner edge thereof, may better match the locking ring 30 compared to a circular gasket ring to further reduce excessive torque and avoid deformation of other components such as the lenses 20 caused by the torque. In addition, the protrusions 54 uniformly provided on the inner edge of the gasket ring 50 may also compress the lens 20 to increase the friction.

In other embodiments, fewer or more protrusions 54 may be provided on the inner edge of the gasket ring 50. For example, the quantity of the protrusions 54 may be two or five. The size and quantity of the protrusions 54 may be set according to the magnitude of the torque.

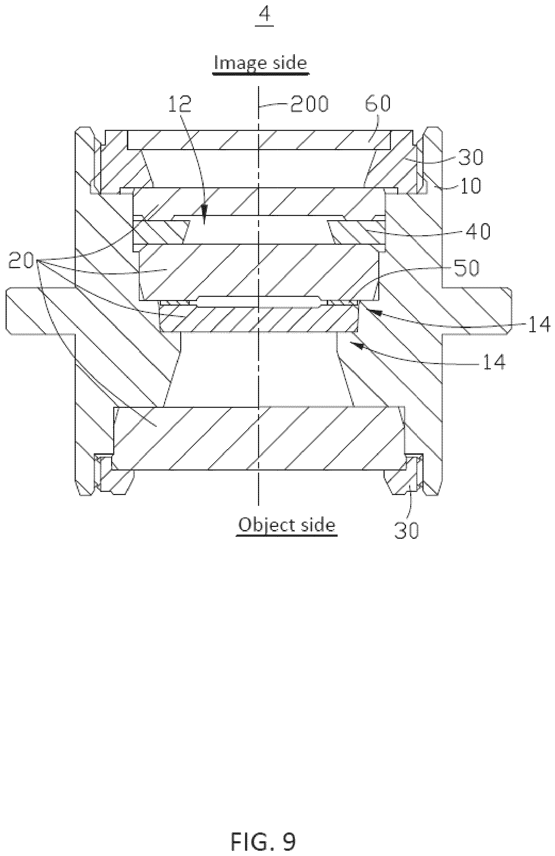

Referring to FIG. 9, a camera 4 is provided according to a fourth embodiment of the present disclosure. The structure of the camera 4 in the fourth embodiment is substantially similar to that of the camera 2 in the second embodiment, except that the gasket ring 50 is placed between the two lenses 20 in the middle in the embodiment. By setting the gasket ring 50 between two adjacent lenses 20, the gasket ring 50 increases the friction between the two adjacent lenses 20 through its own deformation, which is beneficial for fixing the lenses 20. At the same time, the gasket ring 50 may also have a similar function of the spacer ring 40, which allows the two adjacent lenses 20 to be spaced from each other.

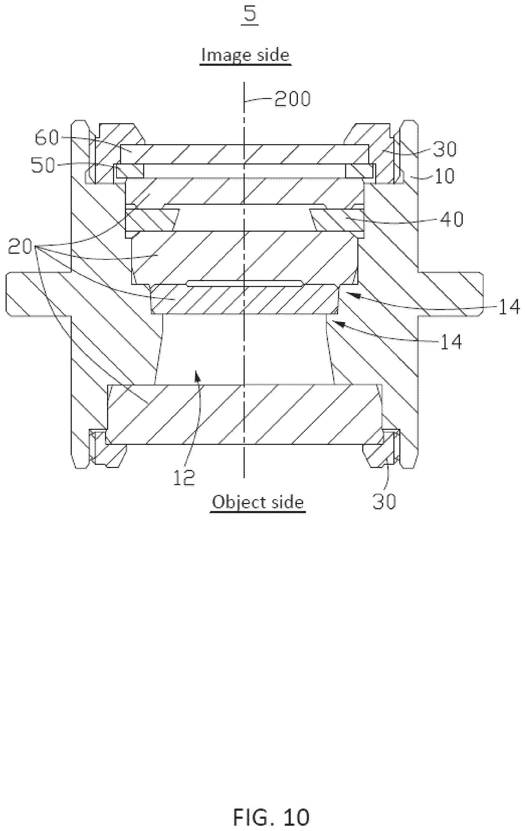

Referring to FIG. 10, a camera 5 is provided according to a fifth embodiment of the present disclosure. The structure of the camera 5 in the fifth embodiment is substantially similar to that of the camera 2 in the second embodiment, except that the filter 60 is located at the object side of the locking ring 30 that is located at the image side, and the gasket ring 50 is located between the filter 60 and the lens 20. By locating the gasket ring 50 between the filter 60 and the lens 20, the gasket ring 50 increases the friction between the filter 60 and the lens 20 through its own deformation, which is beneficial for fixing the lenses 20. At the same time, the gasket ring 50 may also seal the camera 5, thereby preventing impurities such as water and dust from entering the through hole 12.

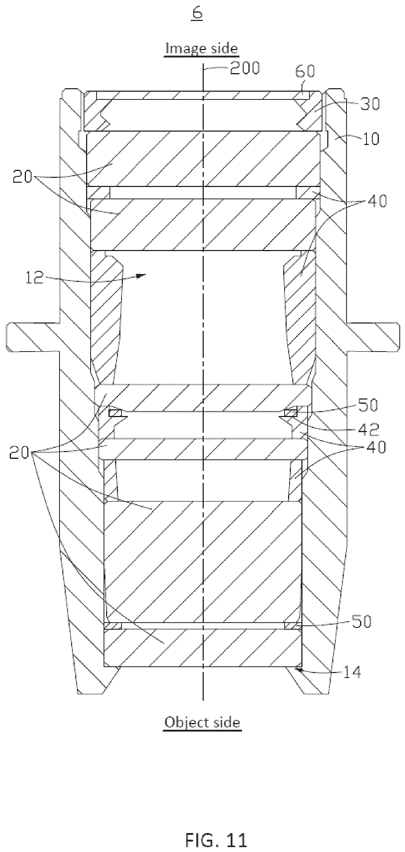

Referring to FIG. 11, a camera 6 is provided according to a sixth embodiment of the present disclosure. The structure of the camera 6 in the sixth embodiment is substantially similar to that of the camera 1 in the first embodiment, except that there are two gasket rings 50 in the embodiment. One of the two gasket rings 50 is located between two adjacent lenses 20 at the object side, and another of the two gasket rings 50 is located between the middle lens 20 and the spacer ring 40 at the object side of the middle lens 20. By locating the two gasket rings 50, when the locking ring 30 locks the lenses 20, the spacer rings 40, and the two gasket rings 50 in the lens barrel 10, both of the gasket rings 50 are compressed and deformed. Each gasket ring 50 generates an elastic force through its own deformation, thereby increasing the friction among the locking ring 30, the lenses 20, and the spacer rings 40, which is beneficial for fixing the lenses 20 and improves the resistance of the camera 6 to a mechanical impact. The shapes of the two gasket rings 50 may be the same or different from each other. For example, one of the two gasket rings 50 is C-shaped and another of the two gasket rings 50 is circular. For example, one of the two gasket rings 50 has a circular cross-section and another of the two gasket rings 50 has a quadrilateral cross-section.

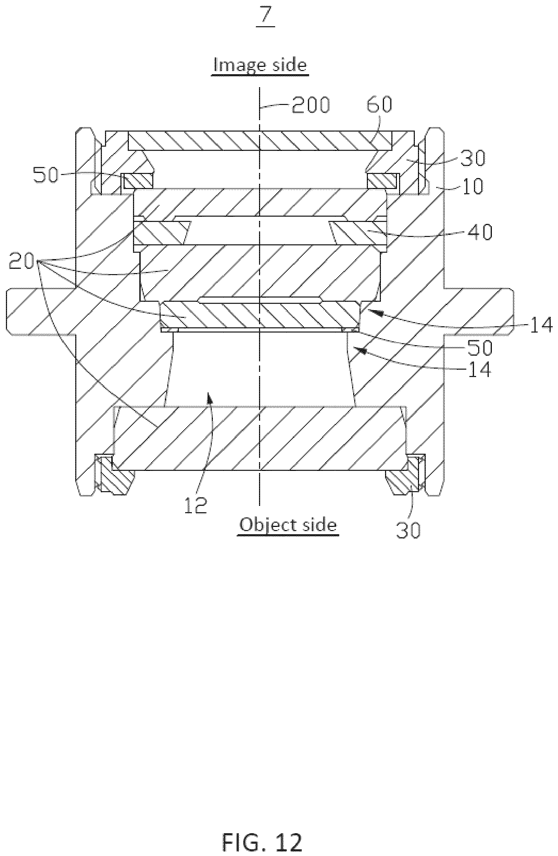

Referring to FIG. 12, a camera 7 is provided according to a seventh embodiment of the present disclosure. The structure of the camera 7 in the seventh embodiment is substantially similar to that of the camera 2 in the second embodiment, except that there are two gasket rings 50. One of the two gasket rings 50 is located between the locking ring 30 at the image side and the adjacent lens 20, and another of the two gasket rings 50 is located between the object side of the lens group and the image side of the supporting portion 14. By setting the two gasket rings 50, when the locking ring 30 locks the lenses 20, the spacer rings 40, and the two gasket rings 50 in the lens barrel 10, both of the two gasket rings 50 are compressed and deformed. Each gasket ring 50 generates an elastic force through its own deformation, thereby increasing the friction among the locking ring 30, the lenses 20, the spacer rings 40, and the supporting portion 14, which is beneficial for fixing the lenses 20 and improves the resistance of the camera 7 to a mechanical impact.

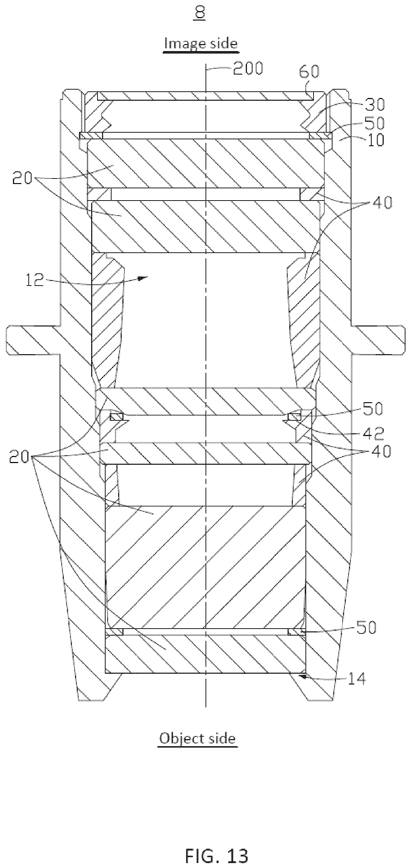

Referring to FIG. 13, a camera 8 is provided according to an eighth embodiment of the present disclosure. The structure of the camera 8 in the eighth embodiment is substantially similar to that of the camera 1 in the first embodiment, except that there are three gasket rings 50 in the embodiment. One of the gasket rings 50 is located between the locking ring 30 and the lens 20, another of the gasket rings 50 is located between the middle lens 20 and the spacer ring 40 at the object side of the middle lens 20, and the remaining gasket ring 50 is located between two adjacent lenses 20 at the object side. By setting the three gasket rings 50, when the locking ring 30 locks the lenses 20, the spacer rings 40, and the gasket rings 50 in the lens barrel 10, the three gasket rings 50 are compressed and deformed. Each gasket ring 50 generates an elastic force through its own deformation, thereby increasing the friction among the locking ring 30, the lenses 20, the spacer rings 40, and the supporting portion 14, which is beneficial for fixing the lenses 20 and improves the resistance of the camera 8 to a mechanical impact.

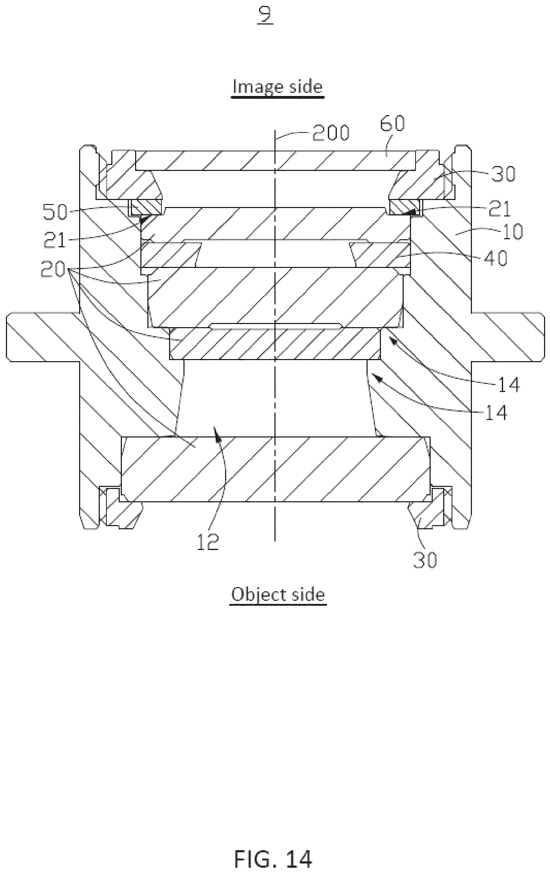

Referring to FIG. 14, a camera 9 is provided according to a ninth embodiment of the present disclosure. The structure of the camera 9 in the ninth embodiment is substantially similar to that of the camera 2 in the second embodiment, except that a limiting groove 21 is defined at the edge of the image side surface of one of the four lens 20 closest to the image side. The gasket ring 50 is received in the limiting groove 21 and abuts against the locking ring 30 and a bottom of the limiting groove 21. By setting the limiting groove 21 at the edge of the image side surface of the lens 20 closest to the image side, when the locking ring 30 is assembled, the limiting groove 21 may prevent the gasket ring 50 from rotating with the locking ring 30 toward the center of the lens 20, thereby ensuring the assembly yield of the camera 9.

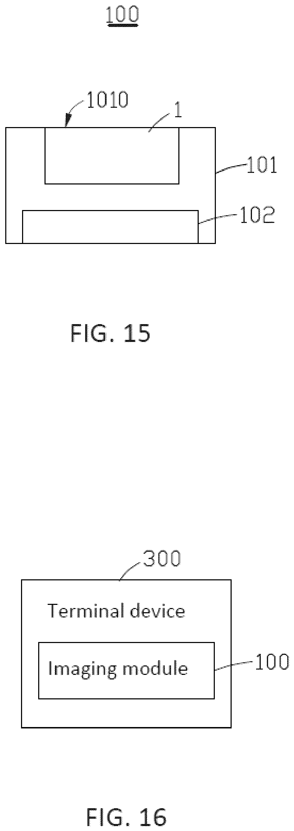

Referring to FIG. 15, an imaging module 100 is further provided according to a tenth embodiment of the present disclosure. The imaging module 100 of the embodiment includes the camera described in any of the first to ninth embodiments. Taking the camera 1 in the first embodiment as an example, the imaging module 100 of the embodiment includes a housing 101, an image sensor 102, and the camera 1. The image sensor 102 is installed in the housing 101, and the housing 101 defines an installation hole 1010. The camera 1 is installed in the installation hole 1010, and the camera 1 is coaxial with the image sensor 102. The image sensor 102 is used to receive light signals passing through the camera 1 and convert the light signals into electrical signals for imaging.

In the camera 1 of the above imaging module 100, after the lenses 20, the spacer rings 40, and the gasket ring 50 are assembled in the through hole 12 of the lens barrel 10, the locking ring 30 is threadedly connected to the image side of the lens barrel 10. As such, the lenses 20, the spacer rings 40, and the gasket ring 50 are locked in the lens barrel 10. The image side surface of the gasket ring 50 is higher than that of the spacer ring 40. By setting the gasket ring 50 between the lens 20 and the spacer ring 40, the gasket ring 50 is compressed indirectly by the locking force of the locking ring 30. After being compressed, the gasket ring 50 is still in contact with the spacer ring 40 and the lens 20, and the parallelism of the camera 1 after assembly will not be affected by the processing accuracy and tolerance of the gasket ring 50. The gasket ring 50 may absorb most of the locking force through its own deformation. The deformation of the gasket ring 50 may increase the friction among the gasket ring 50, the spacer rings 40, and the lenses 20. Also, the friction between the locking ring 30 and the lens 20, the friction between the lens 20 and the spacer ring 40, and the friction between the lens group and the supporting portion 14 are increased, which are beneficial for fixing the lenses 20, the spacer rings 40, and the gasket ring 50 in the lens barrel 10. Thus, the lenses 20 may still be firmly fixed in the lens barrel 10 even under a strong impact, thereby improving the safety and reliability of the camera 1. In addition, through the deformation of the gasket ring 50, the looseness of the lens 20, which is caused by the locking ring 30 being tilted and in contact with the lens 20 by a single edge, may be reduced. The gasket ring 50 generates an elastic force during the deformation. When the camera 1 is switched between high and low temperatures, the gasket ring 50 may abut against the lens 20 through the elastic force, thereby reducing the looseness of the lens 20 at high and low temperatures and improving the reliability of the camera 1. In addition, the gasket ring 50 may abut against the insensitive position of the lens 20, thereby reducing the temperature drift of the glass-plastic structure of camera 1 at high and low temperatures. By setting the gasket ring 50 between two adjacent lenses 20, the elastic force generated by the gasket ring 50 may be evenly transmitted to the lenses 20 located at two sides of the gasket ring 50, thereby avoiding the looseness of the lenses 20. The elastic force generated by the gasket ring 50 may also avoid eccentricity of the lenses 20 caused by the position of the lenses 20 changing with the temperature.

Referring to FIG. 16, a terminal device 300 is further provided according to an eleventh embodiment of the present disclosure. The terminal device 300 of the embodiment includes the imaging module described in the tenth embodiment. The terminal device 300 of the embodiment may be a car, and the imaging module may be a visual sensor. In other embodiments, the terminal device may also be other devices with cameras, as car recorders, security monitoring devices, AR devices, VR devices, mobile phones, tablet computers, or smart watches.

In the camera 1 of the imaging module 100 of the above terminal device 300, after the lenses 20, the spacer rings 40, and the gasket ring 50 are assembled in the through hole 12 of the lens barrel 10, the locking ring 30 is threadedly connected to the image side of the lens barrel 10. As such, the lenses 20, the spacer rings 40, and the gasket ring 50 are locked in the lens barrel 10. The image side surface of the gasket ring 50 is higher than that of the spacer ring 40. By setting the gasket ring 50 between the lens 20 and the spacer ring 40, the gasket ring 50 is compressed indirectly by the locking force of the locking ring 30. After being compressed, the gasket ring 50 is still in contact with the spacer ring 40 and the lens 20, and the parallelism of the camera 1 after assembly will not be affected by the processing accuracy and tolerance of the gasket ring 50. The gasket ring 50 may absorb most of the locking force through its own deformation. The deformation of the gasket ring 50 may increase the friction among the gasket ring 50, the spacer rings 40, and the lenses 20. Also, the friction between the locking ring 30 and the lens 20, the friction between the lens 20 and the spacer ring 40, and the friction between the lens group and the supporting portion 14 are increased, which are beneficial for fixing the lenses 20, the spacer rings 40, and the gasket ring 50 in the lens barrel 10. Thus, the lenses 20 may still be firmly fixed in the lens barrel 10 even under a strong impact, thereby improving the safety and reliability of the camera 1. In addition, through the deformation of the gasket ring 50, the looseness of the lens 20, which is caused by the locking ring 30 being tilted and in contact with the lens 20 by a single edge, may be reduced. The gasket ring 50 generates an elastic force during the deformation. When the camera 1 is switched between high and low temperatures, the gasket ring 50 may abut against the lens 20 through the elastic force, thereby reducing the looseness of the lens 20 at high and low temperatures and improving the reliability of the camera 1. In addition, the gasket ring 50 may abut against the insensitive position of the lens 20, thereby reducing the temperature drift of the glass-plastic structure of camera 1 at high and low temperatures. By setting the gasket ring 50 between two adjacent lenses 20, the elastic force generated by the gasket ring 50 may be evenly transmitted to the lenses 20 located at two sides of the gasket ring 50, thereby avoiding the looseness of the lenses 20. The elastic force generated by the gasket ring 50 may also avoid eccentricity of the lenses 20 caused by the position of the lenses 20 changing with the temperature.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

## Claims

1. A camera (1), **characterized by** comprising:
a lens barrel (10) defining a through hole (12) extending along an optical axis (200), the lens barrel (10) comprising a supporting portion (14) protruding from an inner sidewall of the through hole (12);
a plurality of lenses (20) received in the through hole (12), at least one of the plurality of lenses (20) abutting against the supporting portion (14);
a locking ring (30) received in the through hole (12) and threadedly connected to the lens barrel (10);
a spacer ring (40) received in the through hole (12) and between two adjacent of the plurality of lenses (20); and
a gasket ring (50) received in the through hole (12) and elastically compressible along the optical axis (200) direction, wherein the gasket ring (50) is located between two adjacent of the plurality of lenses (20), between the spacer ring (40) and one of the plurality of lenses (20) adjacent to the spacer ring (40), and/or between the locking ring (30) and one of the plurality of lenses (20) adjacent to the locking ring (30).

2. The camera (1) according to claim 1, **characterized in that**, a ratio of a compression amount of the gasket ring (50) along the optical axis (200) is 20 % to 50 % of a thickness of the gasket ring (50) along the direction of the optical axis (200).

3. The camera (1) according to claim 1 or 2, **characterized in that**, a thickness (T) of the gasket ring (50) along the optical axis (200) is in a range from 0.3 mm to 1 mm.

4. The camera (1) according to any one of claims 1 to 3, **characterized in that**, an outer diameter of the gasket ring (50) along a direction perpendicular to the optical axis (200) is in a range from 3 mm to 30 mm.

5. The camera (1) according to any one of claims 1 to 4, **characterized in that**, a width (C) of the gasket ring (50) along a direction perpendicular to the optical axis (200) is in a range from 0.5 mm to 1 mm.

6. The camera (1) according to any one of claims 1 to 5, **characterized in that**, the gasket ring (50) is C-shaped and defines a notch (52), the gasket ring (50) is contracted toward the notch (52), and an angle defined by the notch (52) is in a range from 5° to 45°.

7. The camera (1) according to any one of claims 1 to 6, **characterized in that**, a shape of a cross-section of the gasket ring (50), when viewed perpendicular to the optical axis (200) and the cross-section contains a geometric center of the gasket ring (50), is circular, elliptical, quadrilateral, hexagonal, or octagonal.

8. The camera (1) according to any one of claims 1 to 7, **characterized in that**, a Shore hardness of the gasket ring (50) is in a range from 20 to 70.

9. The camera (1) according to claim any one of claims 1 to 8, **characterized in that**, two opposite surfaces of the gasket ring (50) along the optical axis (200) are in planar contact with the two adjacent of the plurality of lenses (20), with the spacer ring (40) and one of the plurality of lenses (20) adjacent to the spacer ring (40), and/or with the locking ring (30) and one of the plurality of lenses (20) adjacent to the locking ring (30).

10. The camera (1) according to claim any one of claims 1 to 9, **characterized in that**, the camera (1) further comprises a filter (60) located on a side of the locking ring (30) facing or away from the plurality of lenses (20)v, wherein the spacer ring (40) is located between the filter (60) and one of the plurality of lenses (20) adjacent to the filter (60).

11. An imaging module (100), **characterized by** comprising:
a housing (101) defining an installation hole (1010);
an image sensor (102) installed in the housing (101), and
the camera (1) according to any one of claims 1 to 10, wherein the camera (1) is at least partially received in the installation hole (1010) and coaxial with the image sensor (102).

12. A terminal (300), **characterized by** comprising the imaging module (100) according to claim 11.
